# FASCICULE DE BREVET EUROPEEN

(11) **EP 2 822 913 B1**
(45) Date de publication et mention de la délivrance du brevet: **05.09.2018**
(21) Numéro de dépôt: 13708205.3
(22) Date de dépôt: 13.02.2013
(51) Int. Cl.: C04B 28/02, C04B 38/02, B01F 3/12, B05B 13/00, B05C 5/00

(54) **PROCÉDÉ CONTINU DE FABRICATION D'UN MATERIAU À BASE DE LIANT HYDRAULIQUE ALLEGÉ PAR EXPANSION**
KONTINUIERLICHES VERFAHREN ZUR HERSTELLUNG EINES MATERIALS MIT EINEM HYDRAULISCHEN BINDEMITTEL UND ERLEICHTERUNG DURCH EXPANSION
CONTINUOUS METHOD FOR MANUFACTURING A MATERIAL WHICH CONTAINS A HYDRAULIC BINDER AND WHICH IS LIGHTENED BY EXPANSION

(30) Priorité: 15.02.2012 FR 1251381
(43) Date de publication de la demande: 14.01.2015
(73) Titulaire: Saint-Gobain Weber, 77170 Servon (FR)
(72) Inventeur: SELINGER, Hubert, 79291 Merdingen (DE); MAIER, Wolfram, 79194 Gundelfingen (DE); DA SILVA, Claude, F-93600 Aulnay Sous Bois (FR); ALBERT, Marianne, F-69140 Rilleux La Pape (FR)
(74) Mandataire: Saint-Gobain Recherche
(86) Numéro de dépôt international: PCT/FR2013/050292
(87) Numéro de publication internationale: WO 2013/121143

(56) Documents cités:
- EP-A1- 2 080 741
- WO-A1-2007/134349
- WO-A1-2010/097556
- DE-A1- 19 749 350
- DE-A1-102008 058 641

## Description

### Domaine technique de l'invention

La présente invention concerne le domaine des mortiers allégés pour la façade et le sol. Elle concerne plus particulièrement un procédé d'application continue par pompage d'un mortier à base d'un matériau allégé, un dispositif d'application utilisé dans ledit procédé ainsi que l'utilisation de ce dispositif.

Les mortiers de façade déposés en couche sur des parois ont une triple fonction d'imperméabilisation, d'uniformisation desdites parois et de finition esthétique des façades. Ils sont composés principalement d'un mortier gâché avec de l'eau et déposé en couche épaisse avant durcissement et séchage. Les mortiers de sol permettent la réalisation de chapes et notamment en tant qu'enduits de sols autonivelants.
Le dépôt de ces mortiers peut être réalisé par projection pneumatique à l'aide d'une pompe à mortier.

Les mortiers allégés compatibles avec une utilisation en projection sont actuellement très utilisés. L'application par projection permet de déposer des couches d'épaisseur d'au moins quelques millimètres à quelques centimètres, d'épouser parfaitement la géométrie du support, et permet un gain de temps par rapport aux méthodes traditionnelles manuelles. Les matériaux cimentaires tels que les bétons, ciments ou mortiers avec allègement de la charge sont particulièrement prisés car présentent notamment de bonnes propriétés d'isolants thermiques. Etant plus légers, ils exercent moins de contraintes sur les supports sur lesquels ils sont appliqués.

### Art antérieur

Il est connu, pour augmenter la porosité des mortiers, d'utiliser des composés solides à base de peroxyde lors la fabrication. Ces composés, en se décomposant, libèrent de l'oxygène, et ainsi permettent d'augmenter la quantité de pores présente dans le mortier. La demande EP 0 485 814 décrit l'ajout de 0,1 à 2 % poids d'hydrogénopersulfate de potassium. Ce composé présente l'inconvénient d'entrainer la formation de sous-produits ayant des impacts négatifs sur les propriétés des mortiers, lors de sa décomposition immédiate après l'ajout d'eau.

Il est donc nécessaire de limiter la quantité de cet agent porogène dans les compositions.

D'autre part, la quantité de composés porogènes solides doit être limitée puisque l'expansion du mortier a lieu dans la chambre de la pompe de malaxage : si l'expansion est trop rapide et trop importante, le mortier moussé occupe un volume trop important et repart vers les conduites d'alimentation en mortier sec de la pompe.

Afin d'améliorer le contrôle de la vitesse d'expansion du matériau, il a été envisagé d'utiliser des précurseurs de catalyseurs solubles dans l'eau à la place des catalyseurs insolubles comme le dioxyde de manganèse, classiquement utilisé pour la réaction de décomposition des peroxydes. La demande de brevet DE 197 49 350 décrit ainsi l'addition de précurseur de catalyseur soluble à base de sulfate métallique dans la composition de mortier sec. Le catalyseur lui-même est ainsi préparé in-situ.

La demande WO 2007/134349 décrit un procédé de fabrication de mousses minérales expansées utilisant une solution de 15 à 35% de peroxyde d'hydrogène comme agent d'expansion et un catalyseur approprié permettant de contrôler la formation de mousses dans des conditions normales de température et de pression, indépendamment du pH.

La demande DE 10 2008 058641 A1 décrit un procédé dans lequel une poudre de d'oxyde de magnésium, une solution de chlorure de magnésium et une solution de peroxyde d'hydrogène sont introduites de façon continue ou discontinue dans la chambre de malaxage.

Toutefois, selon ces procédés, les différents constituants sont introduits dans un mélangeur. La présence simultanée d'agent porogène, de catalyseur et d'eau provoque l'expansion du produit. Ce dernier, une fois expansé, est pompé et peut ensuite être appliqué.
Ces procédés présentent l'inconvénient de nécessiter un temps d'attente avant l'application, dû à l'expansion du matériau.

### Description sommaire de l'invention

La présente invention propose un procédé permettant de générer des quantités importantes de pores dans un matériau directement lors de sa fabrication dans un dispositif de projection, de façon continue. L'expansion du matériau se produit in-situ, pendant l'application.

Selon la présente invention, le procédé d'application sur un support d'un mortier à base d'un liant hydraulique, allégé par expansion, met en oeuvre un dispositif de pulvérisation par pompage comprenant une pompe de malaxage, une conduite de sortie de ladite pompe et une buse de pulvérisation fixée sur la conduite de sortie et comprend les étapes suivantes mises en oeuvre en continu dans le dispositif :
a) mélange d'une solution aqueuse contenant un agent porogène à base de peroxyde avec une composition comprenant au moins un liant hydraulique, en présence d'un catalyseur de décomposition de l'agent porogène, et, immédiatement après,
b) projection en continu du mélange expansé obtenu.

Le terme « matériau allégé par expansion » utilisé dans la présente invention désigne un matériau dont la densité a diminué par génération d'oxygène in-situ dans le matériau.

Le terme « composition gâchée » utilisé ci-après désigne une composition une fois mélangée à de l'eau de gâchage, se présentant sous forme d'une pâte, de texture crémeuse, utilisable comme enduit.

Le procédé selon la présente invention permet avantageusement d'obtenir in-situ, dans le dispositif de projection, la formation d'un matériau allégé par expansion. L'expansion du matériau a lieu directement lors de sa projection sur le support. La décomposition chimique de l'agent porogène permet de générer, en continu, une quantité importante de pores lors de l'étape de mélange. La réactivité accélérée, d'une part par la présence du catalyseur et d'autre part, par le fait que l'agent porogène soit contenu dans une solution liquide permet d'expanser le matériau de façon continue.
Il est en effet nécessaire que l'expansion du matériau se fasse rapidement, de façon contrôlée, et soit terminée une fois que le matériau est projeté sur le support. Ce contrôle est notamment possible en choisissant la concentration en agent porogène dans la solution aqueuse, la quantité de catalyseur présente et le rapport entre le débit de matériau gâché et le débit de la solution aqueuse comprenant l'agent porogène à base de peroxyde, et le mode d'introduction de l'agent porogène dans le procédé.

### Description des figures :

- les figures 1A, 1B et 1C sont des représentations schématiques du dispositif de pulvérisation dans lesquelles la composition est gâchée dans la pompe de malaxage.
- les figures 2A et 2B sont des représentations schématiques dans lesquelles la composition est gâchée en amont de la pompe de malaxage.

### Description détaillée de l'invention

La composition destinée à être appliquée se trouve initialement sous forme d'une composition pulvérulente, et comprend au moins un liant hydraulique. Par définition, les liants hydrauliques sont des liants qui font prise de façon irréversible lorsqu'ils sont mis en contact d'eau et qui durcissent en développant des résistances mécaniques.

Le liant hydraulique est généralement choisi parmi ou est une combinaison de :
- de ciment (s), notamment Portland, ciment de mélange pouzzolanique comprenant éventuellement des cendres volantes, des laitiers de hauts fourneaux, de la fumée de silice et/ou des pouzzolanes naturelles ou calcinées ou synthétiques, de ciment alumineux, de ciment sulfoalumineux, de ciment bélitique, ainsi que leurs mélanges, et/ou
- de chaux hydraulique.

La teneur en liant hydraulique dans la composition peut varier de 5 à 100% poids, de préférence entre 50 et 95% poids, selon l'utilisation finale choisie.

La composition peut en outre comprendre d'autres liants tels que des liants minéraux à base de sulfate de calcium ou à base de silicates, de la chaux aérienne, ou des liants organiques par exemple à base de résines.

La composition contient des granulats, agrégats et/ou sables, et on parle alors couramment de mortier ou de béton en fonction de la taille des granulats. Ces composés jouent notamment sur la rhéologie, la dureté ou l'aspect final du produit. Ils sont généralement formés de sables siliceux, calcaires et/ou silicocalcaires. La teneur de tels granulats, agrégats et/ou sables dans la composition utilisée selon le procédé de la présente invention varie classiquement de 0 à 90% poids, de préférence de 0 à 50% poids, par rapport au poids total de la composition.

La composition peut également comprendre des composants appelés fillers, calcaires ou siliceux, dont la teneur est généralement comprise entre 0 et 30% poids par rapport au poids total de la composition. La somme totale de liants et de fillers est habituellement comprise entre 5 et 100% poids, de préférence de 50 à 100%poids, par rapport au poids total de la composition.

La composition peut également contenir des additifs et adjuvants conférant des propriétés particulières. On citera par exemple, des agents rhéologiques, des agents rétenteurs d'eau, des agents entraîneurs d'air, des agents épaississants, des agents de protection biocides, des agents dispersants, des pigments, des accélérateurs et/ou des retardateurs, ainsi que d'autres agents pour améliorer la prise, le durcissement, la stabilité des produits après application et notamment pour ajuster la couleur, l'ouvrabilité, la mise en oeuvre ou l'imperméabilité. La teneur en additifs et adjuvants peut varier entre 0.1 et 10% en poids par rapport au poids total de la composition.

La composition peut également contenir des charges allégeantes, comme par exemple de la vermiculite expansée et/ou de la perlite expansée et/ou du verre ou du polystyrène expansé, des aérogels, voire des fibres végétales, à une teneur de préférence inférieure à 15% poids par rapport au poids total de la composition.

La composition peut également être un mortier allégé tel que décrit dans la demande WO 2010/097556 déposé au nom de la Demanderesse. Ce type de mortier allégé comprend un liant hydraulique et au moins 75% en volume d'additifs isolants thermiquement se présentant sous forme de billes, par exemple en polystyrène expansé. Ces formulations peuvent ne pas comprendre de granulats, agrégats et/ou sables.

Pour pouvoir être projetée sur le support, la composition est malaxée avec l'eau de gâchage jusqu'à l'obtention d'une pâte. Le taux de gâchage correspondant au rapport entre le poids d'eau et le poids de la composition pulvérulente est choisi en fonction de l'application recherchée.

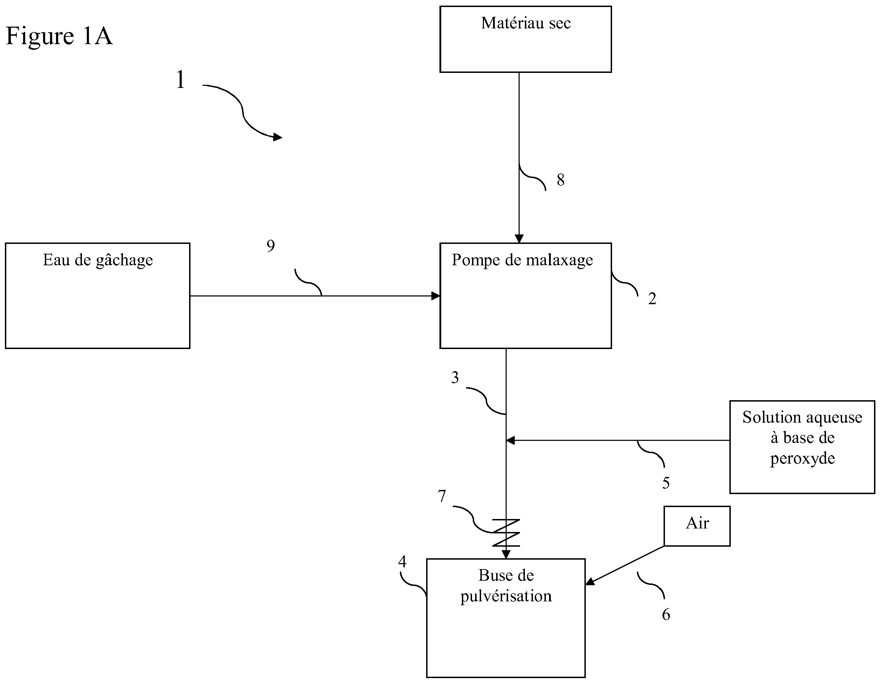

Selon un premier mode de réalisation, représenté sur la figure 1A, la composition est gâchée dans la pompe de malaxage.

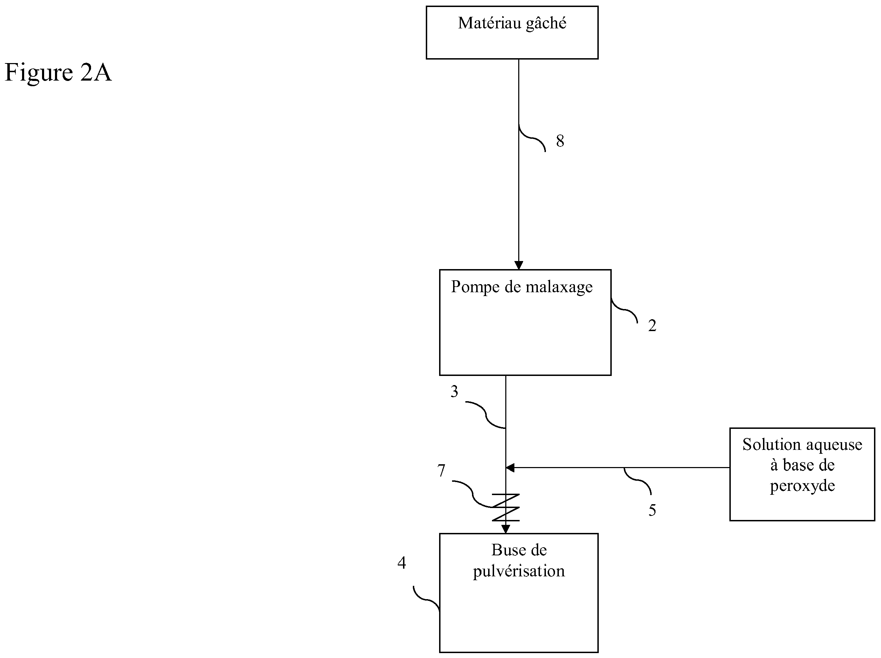

Selon un autre mode de réalisation, représenté sur la figure 2A, la composition est gâchée en amont de la pompe de malaxage, par une étape continue ou discontinue. Le gâchage peut être fait dans un dispositif différent de celui utilisé pour l'application du matériau allégé. La composition gâchée est alors envoyée dans la pompe de malaxage du dispositif de projection.

Le mélange de la solution aqueuse comprenant l'agent porogène avec la composition comprenant un liant hydraulique a lieu dans la conduite de sortie de la pompe de malaxage. L'homogénéisation des différents constituants est effectuée avantageusement dans ladite conduite à l'aide d'un mélangeur statique, placé à l'intérieur de cette conduite.

Le mélange entre la composition comprenant le liant hydraulique et la solution contenant l'agent porogène peut également avoir lieu dans la pompe de malaxage, celle-ci effectuant l'homogénéisation. L'addition de la solution aqueuse contenant l'agent porogène peut être effectuée dans la conduite d'introduction de l'eau de gâchage dans la pompe de mélange.

Le support sur lequel le matériau obtenu est appliqué est tout support connu de l'homme de l'art. En fonction du support et de l'application recherchée, l'homme du métier adaptera notamment la composition du mélange pulvérulent, ainsi que le taux de gâchage.

Le produit pâteux obtenu après gâchage est généralement stocké dans une trémie et est ensuite propulsé par la pompe dans une tuyauterie qui alimente une lance de projection. Le débit de pompage de la pompe est donc lié au débit de projection du produit.

L'expansion de la pâte ainsi obtenue correspond à la formation du matériau allégé. Selon le procédé de la présente invention, cette expansion est réalisée par addition, dans le dispositif de projection, de façon continue d'une solution aqueuse comprenant un agent porogène à base de peroxyde, en présence d'un catalyseur.

La réaction de décomposition de l'agent porogène à base de peroxyde effectuée en présence du catalyseur et est une réaction exothermique de dismutation produisant du dioxygène et de l'eau.

Il est en effet connu que la décomposition des peroxydes est accélérée en présence d'un métal.

Dans le procédé selon la présente invention, le catalyseur peut être mélangé avec la composition de matériau pulvérulent.
Il peut également être mélangé dans la pâte obtenue, après gâchage.
On peut également choisir de dissoudre le catalyseur dans l'eau de gâchage, ou dans la solution aqueuse contenant l'agent porogène à base de catalyseur à condition que le pH soit inférieur à 5.

Dans le mode de réalisation où le mélange entre la composition comprenant le liant hydraulique et la solution contenant l'agent porogène a lieu dans la pompe de malaxage, l'ajout de catalyseur est réalisé dans la conduite de sortie de la pompe de malaxage.

On citera par exemple comme catalyseur, les sels et les oxydes de manganèse, comme par exemple les permanganates et les manganates, les sels et les oxydes de fer, de cobalt, de cuivre, de molybdène, de tungstène, de chrome, d'argent et des enzymes de préférence des catalases.

De façon avantageuse, le catalyseur peut être formé in-situ dans le dispositif de projection. Dans ce cas, un précurseur de catalyseur est mélangé à la composition de matériau pulvérulent, à la pâte obtenue après gâchage, ou est dissous dans l'eau de gâchage ou la solution aqueuse contenant l'agent porogène. Ce précurseur est ensuite transformé en catalyseur actif de décomposition de l'agent porogène à base de peroxyde, selon certaines conditions de réaction.
Le précurseur de catalyseur peut notamment être choisi parmi les sels de manganese (II) solubles dans l'eau, tels que l'acétate de manganèse (II), le sulfate de manganèse (II), le chlorure de manganèse (II) et le nitrure de manganèse (II). Ces sels peuvent se décomposer, dans un milieu basique, en composés insolubles comprenant du manganèse au degré d'oxydation +4, tels que MnO₂ ou MnO(OH)₂, qui sont des catalyseurs connus pour la décomposition des peroxydes.

Le catalyseur peut notamment être dissous dans la solution aqueuse contenant l'agent porogène, si celle-ci est maintenue à un pH inférieur à 5.

La réaction de décomposition du peroxyde n'ayant lieu qu'en conditions de pH basique, la coexistence dans la solution du catalyseur de décomposition et de l'agent porogène ne provoque pas la réaction de décomposition si le pH est acide.

La quantité de catalyseur est comprise entre 0,1 et 5 % poids par rapport à la composition pulvérulente.
Préférentiellement, elle est comprise entre 0,3 et 2% poids et encore plus préférentiellement entre 0,5 et 1,5% poids.

La solution aqueuse contenant l'agent porogène est une solution de peroxyde d'hydrogène, une solution d'acide peroxomonosulfurique, une solution d'acide persoxodisulfurique, une solution de peroxydes alcalins, une solution de peroxydes alcalinoterreux ou une solution de peroxyde organique, par exemple l'acide peroxoacétique ou l'acide peroxobenzoïque.

De façon préférée, l'agent porogène est le peroxyde d'hydrogène.

La concentration de l'agent porogène dans la solution aqueuse est comprise entre 1 et 75% poids, de préférence entre 3 et 50% poids et encore plus préférentiellement entre 5 et 40% poids.

Le rapport entre le débit de la composition gâchée en sortie de la pompe de malaxage et le débit de la solution aqueuse comprenant l'agent porogène à base de peroxyde introduite dans le dispositif de pulvérisation varie entre 100/1 et 100/30 et de préférence entre 100/2 et 100/15.

Ainsi pour une concentration en agent porogène donnée dans la solution aqueuse, l'homme du métier est en mesure d'adapter le débit auquel cette solution est introduite dans le dispositif et mélangée à la composition gâchée de façon à contrôler l'expansion du matériau et de faire en sorte que l'expansion soit rapide et terminée une fois que le matériau allégé est projeté sur le support.

Plus la concentration en agent porogène dans la solution aqueuse est faible, plus il est nécessaire d'augmenter le débit d'introduction de cette solution dans le dispositif pour avoir l'expansion souhaitée. A titre d'exemple, si la concentration en peroxyde dans la solution aqueuse est d'environ 35% poids, le débit d'introduction de la solution peut être relativement faible et le rapport entre le débit de composition gâchée et le débit d'introduction de la solution aqueuse peut être inférieur à 100/3. Inversement si la solution aqueuse est moins concentrée en peroxyde, par exemple contient 8% molaire de peroxyde, le débit devra être augmenté et le rapport entre les débits sera supérieur à 100/10.

Le procédé selon la présente invention permet avantageusement de pulvériser un matériau allégé par expansion dont la densité est inférieure à 400g/l.

Selon le mode de réalisation représenté sur la figure 1A, le gâchage est effectué dans la pompe de malaxage (2) par introduction de la composition sous forme pulvérulente dans la conduite (8) et de l'eau de gâchage dans la conduite (9). La solution aqueuse contenant l'agent porogène à base de peroxyde est introduite dans la conduite (3) de sortie de la pompe de malaxage (2), ce qui constitue l'étape de mélange, le catalyseur ou son précurseur ayant été introduit indifféremment avec l'un des constituants comme décrit précédemment.

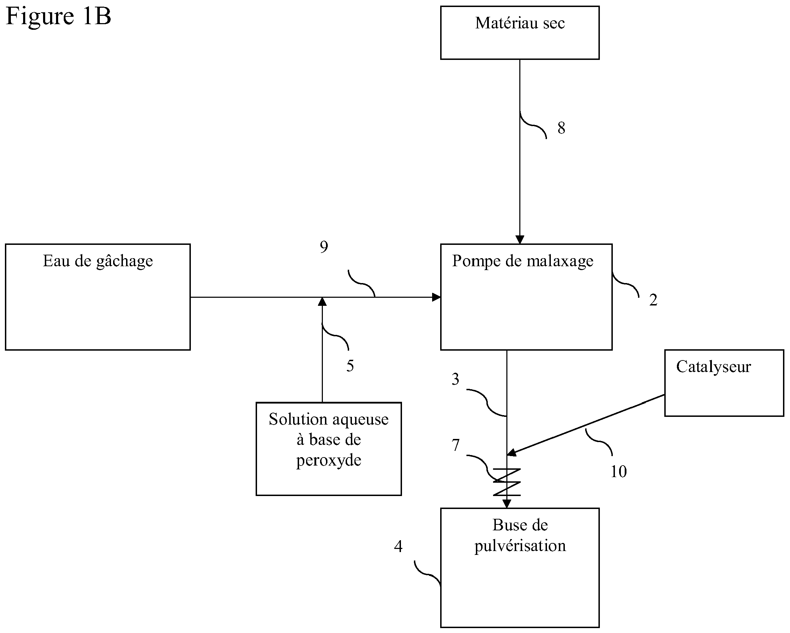

Selon le mode de réalisation représenté sur la figure 1B, la solution aqueuse contenant l'agent porogène à base de peroxyde est introduite directement dans la conduite (9) d'entrée de l'eau de gâchage dans la pompe de malaxage (2). La composition comprenant le liant hydraulique est introduite sous forme pulvérulente par la conduite (8) dans la pompe de malaxage où l'ensemble de ces constituants est homogénéisé. Une solution contenant le catalyseur ou son précurseur est introduite dans la conduite (3) par l'intermédiaire d'une conduite (10).

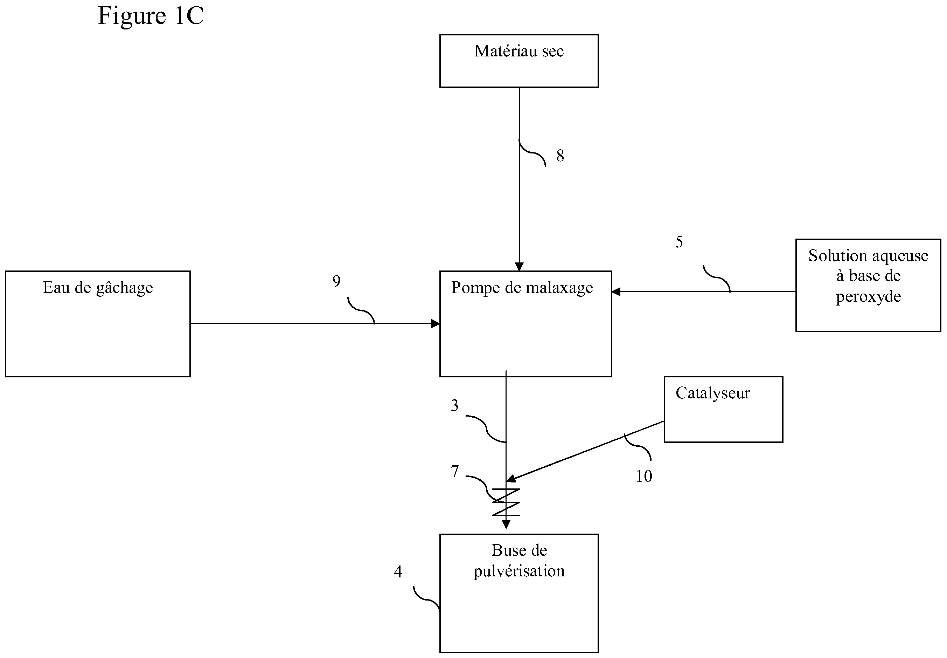

Selon le mode de réalisation représenté sur la figure 1C, la composition sous forme pulvérulente comprenant le liant hydraulique est introduite dans la pompe de malaxage par la conduite (8). Le gâchage a lieu dans la pompe avec l'eau introduite par la conduite d'alimentation (9). La solution contenant l'agent porogène est introduite dans la pompe de malaxage par la conduite (5). La solution contenant le catalyseur de décomposition ou son précurseur est introduite directement par la conduite (10) dans la conduite de sortie (3) de la pompe de malaxage.

Selon le mode de réalisation représenté sur la figure 2A, la composition est gâchée en amont de la pompe de malaxage (2). La solution aqueuse contenant l'agent porogène à base de peroxyde est introduite dans la conduite (3) de sortie de la pompe de malaxage (2). Le catalyseur ou son précurseur est introduit indifféremment avec l'un des constituants comme décrit précédemment.

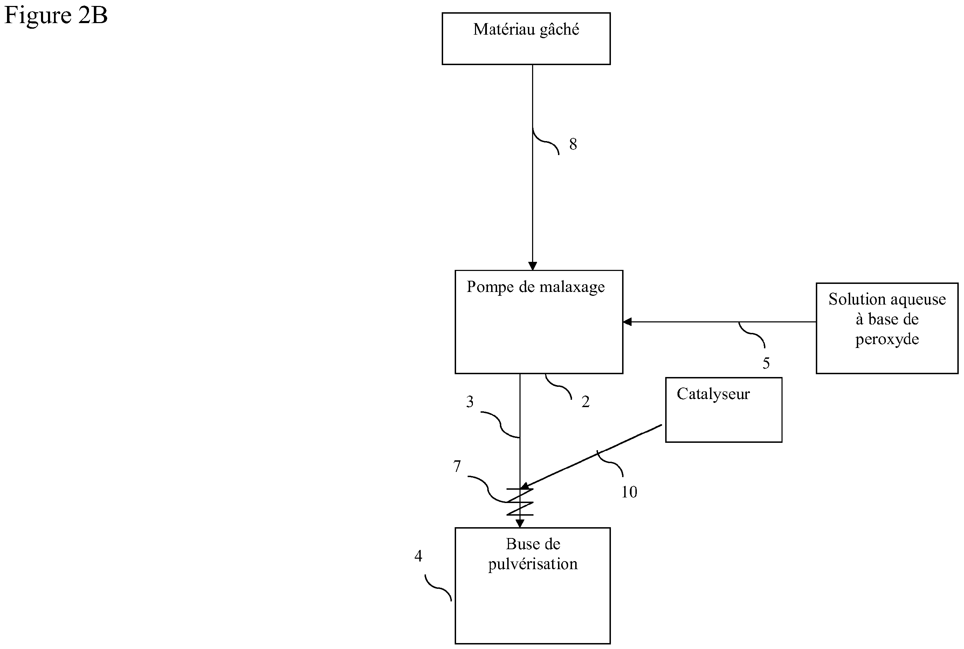

Selon le mode de réalisation représenté sur la figure 2B, la composition est gâchée en amont de la pompe de malaxage (2). La solution aqueuse contenant l'agent porogène à base de peroxyde est introduite directement dans la pompe de malaxage (2). Le catalyseur est ensuite introduit au niveau de la conduite (3) de sortie de ladite pompe, par la conduite (10).

La présente invention a également pour objet un dispositif de pulvérisation sur un support d'un matériau allégé par expansion par pompage utilisé pour mettre en oeuvre le procédé décrit ci-dessus.

Un tel dispositif (1) de pulvérisation par pompage d'un matériau allégé par expansion pour la mise en oeuvre du procédé selon l'invention est caractérisé en ce qu'il comprend au moins :
- une pompe de malaxage (2) alimentée par au moins une conduite (8),
- une conduite de sortie (3) de la pompe de malaxage,
- une buse de pulvérisation (4) fixée sur la conduite de sortie (3),
- une conduite d'introduction (5) de la solution comprenant l'agent porogène à base de peroxyde, et débouchant dans la conduite (3) au niveau du mélangeur statique (7), et
- un tuyau (6) d'amenée d'air au niveau de la buse de projection.

Avantageusement, le dispositif comprend en outre un mélangeur statique (7) situé dans la conduite (3) de sortie de la pompe. Ainsi lors de l'avancée des produits vers la buse de projection (4), sous l'action de la pression de la pompe, l'homogénéisation est poursuivie.

Selon un la présente invention, la conduite d'introduction (5) de la solution aqueuse contenant l'agent porogène à base de peroxyde débouche dans la conduite (3) de sortie de la pompe de malaxage (2) au niveau du mélangeur statique (7).

La présente invention porte également sur l'utilisation d'un tel dispositif pour appliquer des mortiers de façade ou de sols.

L'invention est illustrée de manière non-limitative par les exemples ci-dessous.

### Exemples

Dans les exemples ci-dessous, la teneur en chacun des constituants est donnée en % massique par rapport à la composition totale.

### Exemple 1 :

On réalise le mélange d'une composition de mortier sec comprenant les composants suivants avec un précurseur de catalyseur de décomposition de peroxyde.
88.75% de ciment Portland CEM 52.5 R (Heidelberg Cement, Schelklingen)
10% microsphères en verre (Q-CEL 7014 , Potter Industries LLC)
1% de monohydrate de sulfate de manganèse (précurseur de catalyseur)
0,2% d'éther de cellulose (DOW 267)
0,05% de surfactant (Hostapur OSB).

Le procédé est mis en oeuvre selon la figure 1A. Le mélange (12) de la composition de mortier sec et du précurseur de catalyseur et l'eau de gâchage sont envoyés vers la pompe de malaxage (11) de type M-Tec M100 chacun à un débit de 100 kg/h. La composition gâchée obtenue est pompée de façon continue avec un débit de pompage de 200 kg/h.

Sans addition d'une solution à base de peroxyde, la densité du mortier frais sortant de la buse de pulvérisation est de 920 g/l.

La conduite contenant une solution aqueuse de peroxyde d'hydrogène à 8,5% est ouverte et la solution aqueuse est introduite de façon continue à l'extrémité de la buse au niveau d'un mélangeur statique avec un débit de 20 kg/h. La composition de mortier s'expanse immédiatement et le mortier allégé ainsi obtenu a une densité de 260 g/l.

Un courant d'air comprimé est introduit par le tuyau (6) et une couche de 8 cm d'épaisseur de mortier allégé par expansion stable est projetée sur le mur.

### Exemple 2 :

On réalise le mélange d'une composition de mortier sec comprenant les composants suivants avec un précurseur de catalyseur de décomposition de peroxyde.
84% de ciment blanc (CPA CEM1 52.5N Calcia)
15% perlite 0/1
0,7% de d'acétate de manganèse (précurseur de catalyseur)
0,25% d'éther de cellulose (Tylose MH100000P6)
0,05% de surfactant (Ufapore TP808)

Le procédé est mis en oeuvre selon la figure 2A. La composition de mortier sec à laquelle on a ajouté le précurseur de catalyseur est gâchée (21 kg de mortier sec et 30 kg d'eau) dans un mélangeur de type batch (M-Tec CM), séparé du dispositif de pulvérisation. La pâte ainsi obtenue est envoyée dans une pompe M-Tec P20 et pompée à un débit de 540 kg/h.

Sans addition d'une solution à base de peroxyde, la densité du mortier frais sortant de la buse de pulvérisation est de 815 g/l.

La conduite contenant une solution aqueuse de peroxyde d'hydrogène à 17% est ouverte et la solution aqueuse est introduite de façon continue à l'extrémité de la buse au niveau d'un mélangeur statique avec un débit de 36 kg/h. La composition de mortier s'expanse immédiatement et le mortier allégé ainsi obtenu a une densité de 250 g/l.

Un courant d'air comprimé est introduit par le tuyau (6) et une couche de 8 cm d'épaisseur de mortier allégé par expansion stable est projetée sur le mur.

### Exemple 3 :

On réalise le mélange d'une composition de mortier sec allégé contenant du polystyrène expansé (Weber.Aislone) et un mélange de ciment Portland et de chaux hydraulique comme liant hydraulique avec de l'eau de gâchage dans une pompe de malaxage continu de type MTec Duo-mix.

Une solution comprenant 50% d'eau, 5% d'acétate de manganèse, 5% d'acide sulfurique et 40% d'une solution à 35% de peroxyde d'hydrogène est préparée (pH maintenu à 4).

Le procédé est mis en oeuvre selon la figure 1A. La capacité de pompage de la pompe est de 22 l/min.

Sans addition de la solution à base de peroxyde, la densité du mortier frais sortant de la buse de pulvérisation est de 560 g/l.
Lorsque la conduite contenant la solution aqueuse de peroxyde d'hydrogène est ouverte et qu'elle est introduite à un débit de 20 kg/h dans la conduite de sortie de la pompe de malaxage, la densité du mortier extrait de la buse diminue jusqu'à 400g/l.

### Exemple 4 :

On réalise le mélange d'une composition de mortier sec comprenant les composants suivants avec un précurseur de catalyseur de décomposition de peroxyde.
72.75% de ciment Portland (CEM 52.5 Scheklingen)
16% d'aérogel de silice (Cabot Nanogel) (2 l/kg)
10% de poudre redispersible (Vinapas RE 5044)
1% d'acétate de manganèse (précurseur de catalyseur)
0.2% d'éther de cellulose (DOW 267)
0.05% de surfactant (Hostapur OSB).

Cette composition est gâchée avec de l'eau dans un mélangeur de type batch (M-Tec CM), séparé du dispositif de pulvérisation. La pâte ainsi obtenue est envoyée dans une pompe M-Tec P20 et pompée à un débit de 540 kg/h.

Sans addition d'une solution à base de peroxyde, la densité du mortier frais sortant de la buse de pulvérisation est de 710 g/l.

Le procédé est mis en oeuvre selon la figure 2A. La conduite contenant une solution aqueuse de peroxyde d'hydrogène (concentration de 35%) est ouverte et cette solution est introduite à l'extrémité de la buse au niveau d'un mélangeur statique avec un débit de 14 kg/h. La composition de mortier s'expanse immédiatement et le mortier allégé ainsi obtenu a une densité de 270 g/l.

## Revendications

1. Procédé d'application sur un support d'un mortier, allégé par expansion, à base d'un liant hydraulique, mettant en oeuvre un dispositif de pulvérisation par pompage comprenant une pompe de malaxage, une conduite de sortie de ladite pompe et une buse de pulvérisation fixée sur la conduite de sortie, **caractérisé en ce qu'**il comprend les étapes suivantes mises en oeuvre en continu dans le dispositif :
a) mélange d'une solution aqueuse contenant un agent porogène à base de peroxyde avec une composition comprenant au moins un liant hydraulique, en présence d'un catalyseur de décomposition de l'agent porogène, ledit liant étant choisi parmi ou étant une combinaison
- de ciment (s), notamment Portland, ciment de mélange pouzzolanique comprenant éventuellement des cendres volantes, des laitiers de hauts fourneaux, de la fumée de silice et/ou des pouzzolanes naturelles ou calcinées ou synthétiques, de ciment alumineux, de ciment sulfoalumineux, de ciment bélitique, ainsi que leurs mélanges, et/ou
- de chaux hydraulique,
ledit mélange ayant lieu dans la conduite de sortie de la pompe de malaxage et immédiatement après,
b) projection en continu du mélange allégé obtenu.

2. Procédé selon la revendication précédente **caractérisé en ce que** la composition est gâchée dans la pompe de malaxage.

3. Procédé selon la revendication 1 **caractérisé en ce que** la composition est gâchée en amont de la pompe de malaxage, par une étape continu ou discontinu.

4. Procédé selon l'une des revendications précédentes **caractérisé en ce que** le catalyseur de décomposition de l'agent porogène est mélangé avec la composition comprenant le liant hydraulique, éventuellement gâchée, ou est dissous avec l'eau de gâchage.

5. Procédé selon l'une des revendications 1 à 4 **caractérisé en ce que** le catalyseur de décomposition de l'agent porogène est dissous dans la solution aqueuse contenant l'agent porogène à un pH inférieur à 5.

6. Procédé selon l'une des revendications précédentes dans lequel ladite solution aqueuse est une solution de peroxyde d'hydrogène, une solution d'acide peroxomonosulfurique, une solution d'acide persoxodisulfurique, une solution de peroxydes alcalins, une solution de peroxydes alcalinoterreux ou une solution de peroxyde organique tel que l'acide peroxoacétique ou l'acide peroxobenzoïque.

7. Procédé selon l'une des revendications précédentes dans lequel la concentration de l'agent porogène dans la solution aqueuse est comprise entre 1 et 75% masse, de préférence entre 3 et 50% masse et encore plus préférentiellement entre 5 et 40% masse.

8. Procédé selon l'une des revendications précédentes dans lequel le catalyseur est choisi parmi les sels et les oxydes de manganèse, par exemple les permanganates et les manganates, les sels et les oxydes de fer, de cobalt, de cuivre, de molybdène, de tungstène, de chrome, d'argent et les enzymes de préférence les catalases.

9. Procédé selon l'une des revendications précédentes dans lequel le catalyseur est formé in-situ dans le dispositif de pulvérisation par décomposition en solution aqueuse d'un précurseur choisi parmi les sels de manganese (II) solubles dans l'eau, tels que l'acétate de manganèse (II), le sulfate de manganèse (II), le chlorure de manganèse (II) et le nitrure de manganèse (II).

10. Procédé selon l'une des revendications précédentes dans lequel la quantité de catalyseur est comprise entre 0,1 et 5% poids par rapport à la composition comprenant au moins le liant hydraulique, de préférence entre 0,3 et 2 % poids et encore plus préférentiellement entre 0,5 et 1,5 % poids.

11. Procédé selon l'une des revendications précédentes dans lequel le rapport entre le débit de composition gâchée en sortie de la pompe et le débit de la solution aqueuse comprenant l'agent porogène à base de peroxyde introduite dans le dispositif de pulvérisation varie entre 100/1 et 100/30, de préférence entre 100/2 et 100/15.

12. Dispositif (1) de pulvérisation par pompage d'un matériau allégé expansé pour la mise en oeuvre du procédé selon l'une des revendications précédentes **caractérisé en ce qu'**il comprend au moins :
- une pompe de malaxage (2) comprenant au moins une conduite (8),
- une conduite de sortie (3) de la pompe de malaxage,
- une buse de pulvérisation (4) fixée sur la conduite de sortie (3),
- une conduite d'introduction (5) de la solution comprenant l'agent porogène à base de peroxyde, débouchant dans la conduite (3) au niveau du mélangeur statique (7) et
- un tuyau (6) d'amenée d'air au niveau de la buse de projection

13. Dispositif selon la revendication 12 **caractérisé en ce qu'**il comprend en outre un mélangeur statique (7) placé dans la conduite (3).

14. Dispositif selon l'une des revendications 12 ou 13 **caractérisé en ce qu'**il comprend en outre une conduite (9) d'alimentation en eau de la pompe de gâchage d'eau dans laquelle débouche la conduite d'introduction (5) de la solution aqueuse contenant l'agent porogène à base de peroxyde.

15. Utilisation d'un dispositif (1) de projection selon l'une des revendications 12 à 14 pour appliquer des mortiers de façade ou de sols.

## Patentansprüche

1. Verfahren zum Auftragen eines expandierten auf ein hydraulisches Bindemittel basierten Leichtmörtels auf eine Unterlage, welches eine Pump-Sprüheinrichtung benutzt, die eine Mischpumpe, eine Ausgangsleitung der Pumpe und eine Sprühdüse, die auf der Ausgangsleitung befestigt ist, umfasst, **dadurch gekennzeichnet, dass** es die folgenden Schritte umfasst, die kontinuierlich in der Einrichtung ausgeführt werden:
a) Mischen einer wässrigen Lösung, die ein Porenbildungsmittel auf Peroxidbasis mit einer Zusammensetzung enthält, die mindestens ein hydraulisches Bindemittel in Gegenwart eines Zersetzungskatalysators des Porenbildungsmittels umfasst, wobei das Bindemittel ausgewählt ist oder eine Kombination ist
- aus Zement(en), insbesondere Portland-Zement, puzzolanischem Zementgemisch, das eventuell Flugaschen, Hochofenschlacken, Silikastaub und/oder natürliche oder kalzinierte oder synthetische Puzzolane umfasst, Aluminatzement, Sulfoaluminiatzement, Belitzement sowie ihren Gemischen, und/oder
- aus hydraulischem Kalk,
wobei das Mischen in der Ausgangsleitung der Mischpumpe
und unmittelbar danach stattfindet,
b) kontinuierliches Sprühen des erhaltenen aufgelockerten Gemischs.

2. Verfahren nach dem vorhergehenden Anspruch, **dadurch gekennzeichnet, dass** die Zusammensetzung in der Mischpumpe angerührt wird.

3. Verfahren nach Anspruch 1, **dadurch gekennzeichnet, dass** die Zusammensetzung stromaufwärts der Mischpumpe durch einen kontinuierlichen oder diskontinuierlichen Schritt angerührt wird.

4. Verfahren nach einem der vorhergehenden Ansprüche, **dadurch gekennzeichnet, dass** der Zersetzungskatalysator des Porenbildungsmittels mit der eventuell angerührten Zusammensetzung, die das hydraulische Bindemittel umfasst, vermischt wird, oder mit dem Anmachwasser gelöst wird.

5. Verfahren nach einem der Ansprüche 1 bis 4, **dadurch gekennzeichnet, dass** der Zersetzungskatalysator des Porenbildungsmittels in der wässrigen Lösung, die das Porenbildungsmittel enthält, bei einem pH kleiner als 5 aufgelöst wird.

6. Verfahren nach einem der vorhergehenden Ansprüche, wobei die wässrige Lösung eine Wasserstoffperoxidlösung, eine Peroxomonoschwefelsäurelösung, eine Peroxodischwefelsäurelösung, eine Lösung alkalischer Peroxide, eine Erdalkaliperoxidlösung oder eine Lösung organischer Peroxide, wie Peressigsäure oder Peroxibenzoesäure, ist.

7. Verfahren nach einem der vorhergehenden Ansprüche, wobei die Konzentration des Porenbildungsmittels in der wässrigen Lösung zwischen 1 und 75 Masse-%, bevorzugt zwischen 3 und 50 Masse-% und noch bevorzugter zwischen 5 und 40 Masse-% liegt.

8. Verfahren nach einem der vorhergehenden Ansprüche, wobei der Katalysator aus den Salzen und den Oxiden von Mangan ausgewählt wird, zum Beispiel den Permanganaten und Manganaten, den Salzen und Oxiden von Eisen, Kobalt, Kupfer, Molybdän, Wolfram, Chrom, Silber, und den Enzymen, bevorzugt den Katalasen.

9. Verfahren nach einem der vorhergehenden Ansprüche, wobei der Katalysator an Ort und Stelle in der Sprüheinrichtungen durch Zerlegung, in wässrige Lösung, eines Vorläufers gebildet wird, der aus den Mangansalzen (II), die in Wasser löslich sind, wie Manganacetat (II), Mangansulfat (II), Manganchlorid (II) und Mangannitrid (II), ausgewählt wird.

10. Verfahren nach einem der vorhergehenden Ansprüche, wobei die Katalysatormenge zwischen 0,1 und 5 Gew.-% in Bezug auf die Zusammensetzung liegt, die mindestens das hydraulische Bindemittel umfasst, bevorzugt zwischen 0,3 und 2 Gew.-% und noch bevorzugter zwischen 0,5 und 1,5 Gew.-%.

11. Verfahren nach einem der vorhergehenden Ansprüche, wobei das Verhältnis zwischen dem Durchsatz an angerührter Zusammensetzung am Ausgang der Pumpe und dem Durchsatz der wässrigen Lösung, die das Porenbildungsmittel auf Peroxidbasis umfasst, das in die Sprüheinrichtung eingeführt wird, zwischen 100:1 und 100:30, bevorzugt zwischen 100:2 und 100:15 liegt.

12. Einrichtung (1) zum Sprühen durch Pumpen eines aufgelockerten expandierten Materials zur Umsetzung des Verfahrens nach einem der vorhergehenden Ansprüche, **dadurch gekennzeichnet, dass** es mindestens Folgendes umfasst:
- eine Mischpumpe (2), die mindestens eine Leitung (8) umfasst,
- eine Ausgangsleitung (3) der Mischpumpe,
- eine Sprühdüse (4), die auf dem Leitungsausgang (3) befestigt ist,
- eine Einführleitung (5) der Lösung, die das Porenbildungsmittel auf Peroxidbasis umfasst, die in die Leitung (3) im Bereich des statischen Mischers (7) mündet, und
- einen Luftzuführschlauch (6) im Bereich der Sprühdüse.

13. Einrichtung nach Anspruch 12, **dadurch gekennzeichnet, dass** sie außerdem einen statischen Mischer (7), der in der Leitung (3) platziert ist, umfasst.

14. Einrichtung nach einem der Ansprüche 12 oder 13, **dadurch gekennzeichnet, dass** sie außerdem eine Wasserzuführleitung (9) der Wasseranmachpumpe umfasst, in die die Einführleitung (5) der wässrigen Lösung, die das Porenbildungsmittel auf Peroxidbasis enthält, mündet.

15. Einsatz einer Sprüheinrichtung (1) nach einem der Ansprüche 12 bis 14 zum Auftragen von Fassaden- oder Bodenmörtel.

## Claims

1. Process for the application to a support of a expansion-lightened mortar based on a hydraulic binder, using a pump spraying device comprising a mixing pump, an outlet line of said pump and a spray nozzle attached to the outlet line, **characterized in that** it comprises the following steps carried out continuously in the device:
a) mixing of an aqueous solution containing a pore-forming agent based on peroxide with a composition comprising at least one hydraulic binder, in the presence of a catalyst for decomposition of the pore-forming agent, said binder being chosen among or being a combination of
- cement(s), in particular Portland cement, cement of pozzolanic mixtures optionally comprising fly ashes, blast furnace slags, silica fumes and/or natural or calcined pozzolans, aluminous cement, sulphoaluminous cement, belitic cement, and their mixing, and/or
- hydraulic lime,
the said mixing being carried out in the outlet line of the mixing pump
and immediately after,
b) continuous spraying of the lightweight mixture obtained.

2. Process according to the preceding claim, **characterized in that** the composition is gauged in the mixing pump.

3. Process according to claim 1, **characterized in that** the composition is gauged upstream of the mixing pump, via a continuous or discontinuous step.

4. Process according to one of the preceding claims, **characterized in that** the catalyst for decomposition of the pore-forming agent is mixed with the optionally gauged composition comprising the hydraulic binder, or is dissolved with the gauging water.

5. Process according to one of claims 1 to 4, **characterized in that** the catalyst for decomposition of the pore-forming agent is dissolved in the aqueous solution containing the pore-forming agent at a pH of less than 5.

6. Process according to one of the preceding claims, in which said aqueous solution is a hydrogen peroxide solution, a peroxomonosulphuric acid solution, a peroxodisulphuric acid solution, a solution of alkali metal peroxides, a solution of alkaline-earth metal peroxides or a solution of organic peroxide such as peroxoacetic acid or peroxobenzoic acid.

7. Process according to one of the preceding claims, in which the concentration of the pore-forming agent in the aqueous solution is between 1 and 75% by weight, preferably between 3 and 50% by weight and more preferably still between 5 and 40% by weight.

8. Process according to one of the preceding claims, in which the catalyst is chosen from salts and oxides of manganese, for example permanganates and manganates, salts and oxides of iron, of cobalt, of copper, of molybdenum, of tungsten, of chromium, of silver and enzymes, preferably catalases.

9. Process according to one of the preceding claims, in which the catalyst is formed *in situ* in the spraying device by decomposition, in aqueous solution, of a precursor chosen from water soluble manganese (II) salts such as manganese (II) acetate, manganese (II) sulphate, manganese (II) chloride and manganese (II) nitride.

10. Process according to one of the preceding claims, in which the amount of catalyst is between 0.1 and 5% by weight relative to the composition comprising at least the hydraulic binder, preferably between 0.3 and 2% by weight and more preferably still between 0.5 and 1.5% by weight.

11. Process according to one of the preceding claims, in which the ratio between the flow rate of gauged composition leaving the pump and the flow rate of the aqueous solution comprising the pore-forming agent based on peroxide introduced into the spraying device varies between 100/1 and 100/30, preferably between 100/2 and 100/15.

12. Device (1) for pump spraying of an expanded lightweight material for the implementation of the process according to one of the preceding claims, **characterized in that** it comprises at least:
- one mixing pump (2) comprising at least one line (8),
- one outlet line (3) of the mixing pump,
- one spray nozzle (4) attached to the outlet line (3),
- one line (5) for introducing the solution comprising the pore-forming agent based on peroxide, the said line opening into the line (3) at the static mixer (7)and
- one air inlet pipe (6) level with the spray nozzle.

13. Device according to claim 12, **characterized in that** it additionally comprises a static mixer (7) placed in the line (3).

14. Device according to either of claims 12 and 13, **characterized in that** it additionally comprises a line (9) for supplying water to the water gauging pump into which the line (5) for introducing the aqueous solution containing the pore-forming agent based on peroxide opens.

15. Use of a spraying device (1) according to one of claims 12 to 14 for applying façade or floor mortars.
